# EUROPÄISCHE PATENTSCHRIFT

(11) **EP 3 320 007 B1**
(45) Veröffentlichungstag und Bekanntmachung des Hinweises auf die Patenterteilung: **08.05.2019**
(21) Anmeldenummer: 16730751.1
(22) Anmeldetag: 08.06.2016
(51) Int. Cl.: C08G 18/48, C08G 18/66, C08G 18/76, C08G 18/10, C08G 18/22, C08G 18/28, C09D 175/08, C08G 18/32, C08G 18/40

(54) **BESCHICHTUNGSMITTELZUSAMMENSETZUNG ZUR HERSTELLUNG ABZIEHBARER UND CHEMIEKALIENBESTÄNDIGER BESCHICHTUNGEN**
COATING COMPOSITION FOR FORMING RELEASABLE AND CHEMICAL RESISTANT COATINGS
COMPOSITION D'AGENT DE REVETEMENT DESTINE A LA FABRICATION DE REVETEMENTS RESISTANTS AUX PRODUITS CHIMIQUES ET PELABLES

(30) Priorität: 07.07.2015 EP 15175724
(43) Veröffentlichungstag der Anmeldung: 16.05.2018
(73) Patentinhaber: Akzo Nobel Coatings International B.V., 6824 BM Arnhem (NL)
(72) Erfinder: PIECHA, Christoph, 26935 Stadland (DE); SEEGER, Dirk, 26125 Oldenburg (DE); HOHNHOLZ, Dieter, 27243 Gross Ippener (DE)
(74) Vertreter: Akzo Nobel IP Department
(86) Internationale Anmeldenummer: PCT/EP2016/062968
(87) Internationale Veröffentlichungsnummer: WO 2017/005441

(56) Entgegenhaltungen:
- EP-A1- 2 695 899
- WO-A1-97/35932
- DE-A1-102010 031 682

## Beschreibung

### Gebiet der Erfindung

Die vorliegende Erfindung betrifft abziehbare und chemisch widerstandsfähige Beschichtungen für Metall- und Kunststoffsubstrate sowie die zu deren Herstellung benötigten Beschichtungsmittelzusammensetzungen. Des Weiteren betrifft die vorliegende Erfindung ein Verfahren zur Herstellung derartiger Beschichtungen und die Verwendung der Beschichtungsmittelzusammensetzungen zur schützenden Beschichtung von Metall- und Kunststoffsubstraten im Bereich des Flugzeugbaus.

### Stand der Technik

Im Bereich des Flugzeugbaus werden verschiedene Metalle und metallische Legierungen als Grundbaumittel für den Außenhüllenbau von Flugzeugen verwendet. Die aus diesen Grundbaumitteln hergestellten Einzelbauteile, müssen in Abhängigkeit von ihrer Tragkraft und der Gesamtstatik des Flugzeuges auf unterschiedliche Stärken einstellbar sein. Zusätzlich spielt das Endgewicht eines Flugzeuges eine entscheidende Rolle für die anschließende Wirtschaftlichkeit des Flugzeuges. Aus diesem Grund bestehen bereits in der Bauphase eines Flugzeuges starke Bemühungen eine Gewichtsreduktion der Einzelbauteil bei gleichbleibender Qualität und Stabilität zu ermöglichen. Berechnungen haben gezeigt, dass bei vielen Bauteilen ein Potential besteht in bestimmten Segmenten die Stärke des Bauteils zu reduzieren ohne die Tragfähigkeit oder die Statik negativ zu beeinflussen. Aus diesem Grund besteht durch die selektive Ausdünnung von bestimmten Segmenten eines Bauteils ein sehr großes Potential das Gesamtgewicht eines Flugzeuges zu reduzieren.

Aufgrund der hervorragenden Eigenschaften, wie z.B. einer hohen Festigkeit und hohen Korrosionsbeständigkeit bei gleichzeitiger Flexibilität, und des relativ geringen Gewichtes, kommen im Flugzeugbau vorzugsweise Aluminiumbauteile bzw. Bauteile aus Aluminumlegierungen zum Einsatz.

Aufgrund technischer Limitierungen werden zur Einstellung der Stärke von verschiedenen Segmenten der Bauteile keine mechanischen Fräsen verwendet. Stattdessen kommen chemische Fräsbäder zum Einsatz. Diese chemischen Fräsbäder können alkalisch oder sauer sein. Vorwiegend kommen alkalische Fräsbäder zum Einsatz. Diese enthalten 5 bis 35 %ige NaOH Lösungen und weisen Temperaturen im Bereich von 60 bis 100 °C auf. Fräsprozesse in alkalischen Fräsbädern dauern in der Regel zwischen 4 und 6 Stunden an. Fräsbäder, die einen sauren pH-Wert aufweisen, enthalten in der Regel 32 %ige Salpetersäure und die üblichen Fräszeiten liegen bei ca. 30 min.

Das Fräsen erfolgt über ein vollständiges Eintauchen der zu bearbeitenden Bauteile in die jeweiligen Fräsbäder. Da das gesamte Bauteil in die Fräsbäder eingetaucht wird und dadurch vollständig mit Chemikalien bedeckt ist, müssen nicht zu fräsende Bereiche geschützt werden. Dies geschieht überwiegend durch Beschichtungen, welche vor dem Fräsprozess auf das Bauteil aufgetragen werden. Dabei werden die Bauteile zunächst vollständig beschichtet und anschließend werden die zu fräsenden Segmente des Bauteils demaskiert.

Die bisher bekannten und in der Praxis eingesetzten Beschichtungsmittelzusammensetzungen zur Herstellung von Beschichtungen zum Einsatz in chemischen Fräsbädern sind überwiegend konventionelle Beschichtungsmittelzusammensetzung, wie sie beispielsweise in der US 3,661,840 oder US 3,544,400 offenbart werden. Diese Beschichtungsmittelzusammensetzungen enthalten OH- oder SH-modifiziertes Polybutadien, Polyisocyanate oder Diamine mit einem relativ geringen nichtflüchtigen Anteil von ca. 20 bis 40 %. Sie weisen einen hohen Anteil an leichtflüchtigen Lösemitteln sowie einen sehr hohen Füllstoffgehalt bezogen auf den nichtflüchtigen Anteil auf. Zusätzlich können Phenol- oder Epoxidharze in der Beschichtungsmittelzusammensetzung zur Haftungsverbesserung der Beschichtung eingesetzt werden.

Der Nachteil dieser Beschichtungsmittelzusammensetzungen liegt in einem sehr hohen organischen Lösemittelanteil, der aufgrund der Leichtflüchtigkeit der Lösemittel erhebliche Emissionen verursacht, die je nach Zusammensetzung toxisch sein können und/oder ein erhöhtes Brandrisiko mit sich bringen. Weiterhin ist zum Erreichen der notwendigen Schichtdicken der Beschichtung auf dem Substrat oftmals ein mehrstufiger Applikationsprozess inklusive mehrerer Trockenzeiten notwendig, wodurch der gesamte Prozess zur Herstellung der Beschichtungen sehr zeit- und kostenintensiv ist. Desweiteren weisen die resultierenden Beschichtungen große Qualitätsmängel in Form von Nadelstichen, Lackkochern und/oder Blasen auf, wodurch kein ausreichender Schutz des darunterliegenden Substrates gewährleistet werden kann.

Beschichtungsmittelzusammensetzungen mit einem geringen Lösemittelanteil und einem hohen Festkörpergehalt sind bereits im Stand der Technik beschrieben. So offenbart die WO97/35932 einen "lösemittelfreien, Zwei-Komponenten-Abziehlack für Metalloberflächen" sowie ein Verfahren zur Oberflächenbeschichtung von Metallteilen, insbesondere Aluminiumteilen, mit Hilfe dieses Abziehlackes. Diese "lösemittelfreien" Beschichtungsmittelzusammensetzungen weisen jedoch ebenfalls einen relativ hohen Gehalt an Füllstoffen auf, wodurch die Lagerstabilität stark beeinträchtigt wird. Ebenfalls zeigen die aus dem Stand der Technik bekannten Beschichtungen eine starke Unterwanderungsneigung, wodurch es im Fräsprozess zu einer unkontrollierten Ablösung der Beschichtungen vom Substrat kommen kann. Beschichtungen aus dem Stand der Technik zeigen ungleichmäßige Unterwanderungseinfälle, die üblicherweise im Bereich von 2 bis 5 mm liegen. Ein weiteres Problem der aus dem Stand der Technik bekannten Beschichtungen stellt die schlechte Sichtbarkeit von Klingenanschnitten dar, wodurch das gezielte aufeinander Zuführen von Schnittkanten stark erschwert wird.

### Aufgabe der vorliegenden Erfindung

Der vorliegenden Erfindung lag die Aufgabe zugrunde, die zuvor beschriebenen Nachteile des Standes der Technik zu beseitigen. Es sollten insbesondere Beschichtungsmittelzusammensetzungen zur Verfügung gestellt werden, die die Herstellung einer abziehbaren und chemikalienbeständigen Beschichtung für Metall- und Kunststoffsubstrate ermöglichen. Diese Beschichtungsmittelzusammensetzungen sollen einen möglichst geringen Anteil an Lösemitteln enthalten, um aus ökologischen Gesichtspunkten die Lösemittelemission möglichst gering zu halten. Zusätzlich sollen die Beschichtungsmittelzusammensetzungen es ermöglichen, die benötigten Schichtdicken der Beschichtung mittels eines einstufigen Applikationsprozesses herzustellen, so dass ein zeit- und kostenintensiver mehrstufiger Applikationsprozess entfällt. Desweiteren sollen die Beschichtungsmittelzusammensetzungen eine verbesserte Lagerstabilität aufweisen.

Die aus den Beschichtungsmittelzusammensetzungen hergestellten Beschichtungen sollen eine verbesserte Qualität hinsichtlich des reduzierten Auftretens von Nadelstichen, Lackkochern und/oder Blasen aufweisen, so dass ein verbesserter Schutz des darunterliegenden Substrates gewährleistet ist. Zusätzlich sollen die Beschichtungen eine verringerte Unterwanderungsneigung in chemischen Fräsbädern aufweisen, so dass während des Fräsprozesses keine unkontrollierte Ablösung der Beschichtung vom Substrat stattfindet. Eine weitere Aufgabe der vorliegenden Erfindung besteht darin die Sichtbarkeit von Klingenanschnitten zu verbessern, um somit das Zusammenführen von Schnittkanten zu erleichtern.

### Lösung der Aufgabe

Die der vorliegenden Erfindung zugrundeliegenden Aufgaben konnten überraschenderweise durch die Bereitstellung einer Beschichtungsmittelzusammensetzung gelöst werden, enthaltend mindestens eine Bindemittelkomponente **A** und mindestens eine Härterkomponente **B**,
die Bindemittelkomponente **A** enthaltend,
**A1** mindestens eine Polyetherpolyolkomponente aus Poly(oxyalkyen)glykol,
**A2** mindestens ein aromatisches Diamin,
**A3** Silikonelastomerpartikel und
**A4** mindestens einen Polyurethanharnstoff,
die Härterkomponente **B** enthaltend,
**B1** mindestens eine urethangruppenhaltige Komponente enthaltend unblockierte Isocyanatgruppen und
**B2** mindestens ein aromatisches Diisocyanat aus Methylendi(phenylisocyanat),
wobei die Härterkomponente **B** einen Gehalt an unblockierten Isocyanatgruppen von 10 bis 30 Gew.-% aufweist und
der Festkörpergehalt der Beschichtungsmittelzusammensetzung größer als 95 Gew.-% ist.

Die erfindungsgemäßen Beschichtungsmittelzusammensetzungen enthalten mindestens eine Bindemittelkomponente **A** und eine Härterkomponente **B**. Trotz der gewählten Begriffe "Bindemittelkomponente **A**" und "Härterkomponente **B**", stellt der allgemeine Begriff Bindemittel im Sinne der vorliegenden Erfindung den nichtflüchtigen Anteil (= Festkörper) des Beschichtungsstoffs ohne Pigmente und Füllstoffe dar. Zu den Bindemitteln zählen daher beispielsweise auch Vernetzungsmittel, wie sie beispielsweise in der Härterkomponente **B** enthalten sind, und Additive wie beispielsweise Netz- und oder Dispergiermittel, Entschäumer, Verlaufadditive, Rheologieadditive oder Katalysatoren, soweit diese unter den Bedingungen zur Bestimmung des Bindemittelgehalts nicht flüchtig sind. Der Bindemittelgehalt eines Beschichtungsmittels wird mit dem Extraktionsverfahren nach Soxhlet (ISO 13944:2012; November 2012) bestimmt.

Der Festkörper der Beschichtungsmittelzusammensetzung wird nach ISO 3251:2008 bestimmt, indem 1 g der Beschichtungsmittelzusammensetzung für 60 min bei 105 °C getrocknet wird. Der nach Trocknung verbleibende nichtflüchtige Anteil wird zur Einwaage ins Verhältnis gesetzt und gibt den prozentualen Festkörper der Beschichtungsmittelzusammensetzung an.

Erfindungsgemäß ist der Festkörpergehalt der Beschichtungsmittelzusammensetzungen größer als 95 Gew.-%. Bevorzugt ist der Festkörpergehalt größer als 97 Gew.- %, besonders bevorzugt größer als 98 Gew.-% und ganz besonders bevorzugt größer als 99 Gew.-%.

Der Bindemittelanteil am Festkörper der erfindungsgemäßen Beschichtungsmittelzusammensetzung beträgt vorzugsweise 80 bis 98 Gew.-%, besonders bevorzugt 85 und 95 Gew.-%. Beträgt der Bindemittelanteil am Festkörper 100 Gew.-%, so bedeutet dies, dass der Festkörper weder Pigmente noch Füllstoffe enthält.

Die Hydroxylzahl (OH-Zahl) der eingesetzten Polymere wird gemäß DIN EN ISO 4629 bestimmt.

Der Isocyanatgruppengehalt der eingesetzten Polyisocyanate wird gemäß DIN EN ISO 11909 bestimmt.

Bei der Angabe des Molekulargewichts der Polymere handelt es sich um gewichtsmittlere Molekulargewichte M_{w}. Das gewichtsmittlere Molekulargewicht wird gemäß DIN 55672-1:2007-08 bestimmt.

Soweit hierin nicht anders angegeben, beziehen sich alle Norm-Angaben auf die zum Anmeldetag der vorliegenden Erfindung aktuelle Norm.

Alle prozentualen Angaben und Angaben von Stoffparametern bezüglich der angegebenen Komponenten **A** und **B** und die darin enthaltenen Komponenten beziehen sich - wie üblich - auf die jeweilige Komponente ohne organischen Lösemittelanteil, sofern nicht ausdrücklich anders angegeben. Enthält beispielsweise eine erfindungsgemäße Beschichtungsmittelzusammensetzung 10 Gew.-% einer käuflichen Formulierung eines Polyetherpolyols, die das Polyetherpolyol als 50 gewichtsprozentige Lösung in einem Lösemittel enthält, so bedeutet dies, dass die erfindungsgemäße Beschichtungsmittelzusammensetzung 5 Gew.-% des Polyetherpolyols (d.h. 50 Gew.-% von 10 Gew.-%) enthält. Das über die käufliche Formulierung eingeführte Lösemittel ist somit kein prozentualer Bestandteil der Polyetherpolyols, sondern zählt zum Anteil des Lösemittels.

### Bindemittelkomponente A

Die erfindungsgemäßen Beschichtungsmittelzusammensetzungen enthalten mindestens eine Bindemittelkomponente **A**, wobei die Bindemittelkomponente **A** mindestens eine Polyetherpolyolkomponente **A1** aus Poly(oxyalkylen)glykol, mindestens ein aromatisches Diamin **A2**, Silikonelastomerpartikel **A3** und mindestens einen Polyurethanharnstoff **A4** enthält.

### Polyetherpolyolkomponente A1

Die erfindungsgemäßen Beschichtungsmittelzusammensetzungen enthalten in der Bindemittelkomponente **A** mindestens eine Polyetherpolyolkomponente **A1** aus Poly(oxyalkylen)glykol. Bevorzugt werden Poly(oxyalkylen)glykole aus Ethylen- und/oder Propylenoxid verwendet. Bevorzugt enthält die Polyetherpolyolkomponente **A1** aus Poly(oxyalkylenglykol) mindestens ein Poly(oxyalkylen)glykol aus Ethylen- und/oder Propylenoxid.

In einer besonders bevorzugten Ausführungsform enthält die Polyetherpolyolkomponente **A1** mindestens ein propoxyliertes Polyethylenglykol **A1.1**, mindestens ein Polypropylenglykol **A1.2** sowie mindestens ein propoxyliertes Trimethylolpropan **A1.3.** In dieser besonders bevorzugten Ausführungsform weist das propoxylierte Polyethylenglykol **A1.1** ein gewichtsmittleres Molekulargewicht M_{w} zwischen 6000 und 7000 g/mol auf und die OH-Zahl des Polypropylenglykols **A1.2** liegt zwischen 25 und 35 mg KOH/g.

Die Polyetherpolyolkomponente **A1** ist in den erfindungsgemäßen Beschichtungsmittelzusammensetzungen vorzugsweise in einer Menge von 8 bis 76 Gew.-%, besonders bevorzugt in einer Menge von 20 bis 70 Gew.-%, bezogen auf das Gesamtgewicht der Beschichtungsmittelzusammensetzung enthalten.

### Aromatisches Diamin A2

Die erfindungsgemäßen Beschichtungsmittelzusammensetzungen enthalten in der Bindemittelkomponente **A** mindestens ein aromatisches Diamin **A2.**

Vorzugsweise handelt es sich beim aromatischen Diamin **A2** um einen einkernigen Aromaten. Vorzugsweise sind die beiden Amingruppen des aromatischen Diamins **A2** jeweils direkt an den Aromaten gebunden. Vorzugsweise tragen ein, zwei, drei, oder vier der verbleibenden Substitutionspositionen des einkernigen Aromaten, besonders bevorzugt genau drei der verbleibenden Substitutionspositionen, Alkylreste. In einer besonders bevorzugten Ausführungsform handelt es sich bei den Alkylresten um Methylreste und/oder Ethylreste und in einer ganz besonders bevorzugten Ausführungsform ist das aromatische Diamin **A2** 3,5-Diethyltoluol-2,4-diamin und/oder 3,5-Diethyltoluol-2,6-Diamin. Geeignete aromatische Diamine **A2** werden beispielsweise von der Firma Aldrich angeboten.

Das aromatische Diamin **A2** ist in den erfindungsgemäßen Beschichtungsmittelzusammensetzungen vorzugsweise in einer Menge von 1 bis 8 Gew.-%, besonders bevorzugt in einer Menge von 3 bis 5 Gew.-%, bezogen auf das Gesamtgewicht der Beschichtungsmittelzusammensetzung enthalten.

Das mindestens eine aromatische Diamin **A2** wird in den erfindungsgemäßen Beschichtungsmittelzusammensetzungen als Quervernetzer eingesetzt. Eine Verringerung des gewichtsprozentualen Anteils des aromatischen Diamins **A2** am Gesamtgewicht der Beschichtungsmittelzusammensetzung führt zu einer Beeinträchtigung der Weiterreißfestigkeit der resultierenden Beschichtung. Eine Erhöhung des gewichtsprozentualen Anteils des aromatischen Diamins **A2** am Gesamtgewicht der Beschichtungsmittelzusammensetzung führt zu einer verringerten chemischen Beständigkeit der resultierenden Beschichtung sowie einer verschlechterten Verarbeitbarkeit der Beschichtungsmittelzusammensetzung.

### Silikonelastomerpartikel A3

Desweiteren enthalten die erfindungsgemäßen Beschichtungsmittelzusammensetzungen in der Bindemittelkomponente **A** Silikonelastomerpartikel **A3**. Im Rahmen dieser Erfindung werden die Silikonelastomerpartikel zu den Bindemitteln gezählt. Bei den erfindungsgemäß einzusetzenden Silikonelastomerpartikeln **A3** handelt es sich vorzugsweise um Kern-Schale-Partikel. Gemäß der IUPAC-Definition enthalten Kern-Schale-Partikel mindestens zwei Phasen. Kern-Schale-Systeme setzen sich zusammen aus einem inneren Teil, dem sog. Kern, und einem äußeren Teil, der sog. Schale.

Die Silikonelastomerpartikel **A3** besitzen vorzugsweise einen Kern enthaltend vernetztes Polysiloxan und eine Schale, die reaktive Gruppen aufweist. Der Kern ist vorzugsweise ein vernetztes Polyorganosiloxan, welches Dialkylsiloxan-Wiederholungseinheiten aufweist, wobei der Ausdruck Alkyl einen C₁ bis C₁₈-Rest bedeutet. Bevorzugt enthält der Kern Dimethylsiloxan-Wiederholungseinheiten. Die reaktiven Gruppen der Schale enthalten bevorzugt Epoxidgruppen, ethylenisch ungesättigte Gruppen und/oder Hydroxylgruppen auf. Besonders bevorzugt enthalten die reaktiven Gruppen der Schale Hydroxylgruppen.

Die Silikonelastomerpartikel **A3** sind in den erfindungsgemäßen Beschichtungsmittelzusammensetzungen vorzugsweise in einer Menge von 0,2 bis 9 Gew.-%, besonders bevorzugt in einer Menge von 3 bis 7 Gew.-%, bezogen auf das Gesamtgewicht der Beschichtungsmittelzusammensetzung enthalten.

Eine Verringerung des gewichtsprozentualen Anteils der Silikonelastomerpartikel **A3** am Gesamtgewicht der Beschichtungsmittelzusammensetzung führt zu einer verschlechterten chemischen Beständigkeit der resultierenden Beschichtungen. Die verringerte chemische Beständigkeit der Beschichtung äußert sich in einer erhöhten Unterwanderungsneigung, welche sich durch Ablösung der Beschichtung während des chemischen Fräsprozesses bemerkbar macht.

Die Silikonelastomerpartikel **A3** haben vorzugsweise eine Volumenpartikelgröße mit einem D₅₀-Wert im Bereich von 0,05 bis 5 µm, bevorzugt von 0,1 bis 3 µm. Die Teilchengröße von Silikonelastomerpartikeln kann im Allgemeinen durch statische Lichtstreuung (Laserbeugung) nach ISO 13320:2009-10 bestimmt werden.

Besonders bevorzugt sind die Silikonelastomerpartikel **A3** in einer Polyetherpolyolkomponente **A1** aus Poly(oxyalkylen)glykol dispergiert. Dabei ist es ganz besonders bevorzugt, wenn als Dispergiermedium propoxyliertes Trimethylolpropan **A1.3** verwendet wird. Bei dieser ganz besonders bevorzugten Ausführungsform enthält die Dispersion zwischen 20 und 60 Gew.-%, vorzugsweise zwischen 35 und 45 Gew.-%, dispergierte Silikonelastomerpartikel bezogen auf das Gesamtgewicht der Dispersion.

Geeignete kommerziell erhältliche Produkte dieser besonders bevorzugten Ausführungsform sind von der Firma Evonik unter der Produktlinie Albidur® erhältlich.

### Polyurethanharnstoff A4

Als weiteren Bestandteil enthalten die erfindungsgemäßen Beschichtungsmittelzusammensetzungen in der Bindemittelkomponente **A** mindestens einen Polyurethanharnstoff **A4.**

Der Polyurethanharnstoff **A4** ist in den erfindungsgemäßen Beschichtungsmittelzusammensetzungen vorzugsweise in einer Menge von 0,5 bis 11 Gew.-%, besonders bevorzugt in einer Menge von 3 bis 8 Gew.-%, bezogen auf das Gesamtgewicht der Beschichtungsmittelzusammensetzung enthalten.

Der Einsatz eines Polyurethanharnstoffs **A4** ist in den erfindungsgemäßen Beschichtungsmittelzusammensetzungen für die chemische Widerstandsfähigkeit der resultierenden Beschichtung unerlässlich. Eine Verringerung des gewichtsprozentualen Gehaltes an Polyurethanharnstoff in der Beschichtungsmittelzusammensetzung führt zu einer verringerten chemischen Widerstandsfähigkeit der erfindungsgemäßen Beschichtung in chemischen Fräsbädern, wodurch es zur Ablösung der Beschichtungen vom beschichteten Substrat kommen kann.

In einer ganz besonders bevorzugten Ausführungsform kommen Formulierungen zum Einsatz, bei denen der Polyurethanharnstoff **A4** in einer Polyetherpolyolkomponente **A1** aus Poly(oxyalkylen)glykol vorliegt. Dabei ist es ganz besonders bevorzugt, wenn der Polyurethanharnstoff **A4** im Polypropylenglykol **A1.2** vorliegt. Bei dieser ganz besonders bevorzugten Ausführungsform enthält die Mischung aus Polypropylenglykol **A1.2** und Polyurethanharnstoff **A4** zwischen 20 und 40 Gew.-%, vorzugsweise zwischen 18 und 22 Gew.-%, Polyurethanharnstoff **A4**, bezogen auf das Gesamtgewicht dieser Formulierung.

Geeignete kommerziell erhältliche Produkte dieser ganz besonders bevorzugten Ausführungsform von **A4** sind unter der Produktlinie Desmophen® der Firma Bayer Material Sciene erhältlich.

### Härterkomponente B

Die erfindungsgemäßen Beschichtungsmittelzusammensetzungen enthalten mindestens eine Härterkomponente **B**, wobei die Härterkomponente **B** mindestens eine urethangruppenhaltige Komponente enthaltend unblockierte Isocyanatgruppen **B1** sowie mindestens ein aromatisches Diisocyanat aus Methylendi(phenylisocyanat) **B2** aufweist. Erfindungsgemäß weist die Härterkomponente **B** einen Gehalt an unblockierten Isocyanatgruppen von 10 bis 30 Gew.-%, bevorzugt von 15 bis 30 Gew.-%, auf.

Die Härterkomponente **B** ist in den erfindungsgemäßen Beschichtungsmittelzusammensetzungen vorzugsweise in einer Menge von 20 bis 40 Gew.-%, besonders bevorzugt in einer Menge von 24 bis 32 Gew.-%, bezogen auf das Gesamtgewicht der Beschichtungsmittelzusammensetzung enthalten.

Die urethangruppenhaltige Komponente **B1** der Härtermischung **B** wird vorzugsweise hergestellt durch Reaktion einer hydroxylgruppenhaltigen Komponente **B1.1** mit einer Isocyanatkomponente **B1.2.** Vorzugsweise handelt es sich bei der hydroxylgruppenhaltigen Komponente **B1.1** um eine Polyetherpolyolkomponente aus Poly(oxyalkylen)glykol. Bevorzugt werden Poly(oxyalkylen)glykole aus Ethylen- und/oder Propylenoxid eingesetzt. Besonders bevorzugt ist die Komponente **B1.1** ein ethoxyliertes Polypropylenglykol. Geeignete kommerziell erhältliche Produkte sind von der Firma Bayer Material Science unter der Produktlinie Desmophen® erhältlich.

Vorzugsweise ist die Isocyanatkomponente **B1.2** zur Herstellung der urethangruppenhaltigen Verbindung **B1** ein aromatisches Diisocyanat, vorzugsweise ein aromatisches Diisocyanat aus Methylendi(phenylisocyanat).

Bei der Herstellung der urethangruppenhaltigen Verbindung **B1** enthaltend freie Isocyanatgruppen wird das Verhältnis der OH-Gruppen der Komponente **B1.1** zu den NCO-Gruppen der Komponente **B1.2** vorzugsweise so gewählt, dass für das Verhältnis OH:NCO gilt OH < NCO. Vorzugsweise liegt dabei das Verhältnis von OH:NCO in einem Bereich von 1:1,05 bis 1:2,05. Besonders bevorzugt ist das Verhältnis von OH:NCO 1:2. Der Überschuss an NCO-Gruppen im Verhältnis zu den OH-Gruppen führt dazu, dass die urethangruppenhaltige Komponente **B1** unblockierte NCO-Gruppen trägt, die für die späteren Vernetzungsreaktionen mit der Bindemittelkomponente **A** zur Verfügung stehen. Es ist besonders bevorzugt wenn alle OH-Gruppen der Komponente **B1.1** mit den Isocyanatgruppen der Komponente **B1.2** unter Ausbildung von Urethangruppen reagiert haben, so dass die urethangruppenhaltige Komponente **B1** keine OH-Gruppen aufweist.

Die urethangruppenhaltige Verbindung **B1** weist vorzugsweise ein gewichtsmittleres Molekulargewicht M_{w} von 4000 bis 6000 g/mol, besonders bevorzugt von 2000 bis 3000 g/mol auf.

Ganz besonders bevorzugt wird zur Herstellung der urethangruppenhaltigen Komponente **B1** als Isocyanatkomponente **B1.2** das aromatische Diisocyanat aus Methylendi(phenylisocyanat) **B2** verwendet, welches erfindungsgemäß in der Härterkomponente **B** enthalten ist.

Erfindungsgemäß enthält die Härterkomponente **B** neben der Komponente **B1** mindestens ein aromatisches Diisocyanat aus Methylendi(phenylisocyanat) **B2.** Vorzugsweise ist das aromatische Diisocyanat **B2** 2,2'-Diphenylmethan-diisocyanat oder 2,4'-Diphenylmethandiisocyanat oder eine Kombination daraus.

Vorzugsweise enthält die Härterkomponente **B** 30 bis 80 Gew-%, besonders bevorzugt 40 bis 70 Gew.-%, des aromatischen Diisocyanat aus Methylendi(phenylisocyanat) **B2.**

Die Härterkomponente **B** kann hergestellt werden, in dem zunächst die urethangruppenhaltige Komponente **B1** synthetisiert wird. Im nächsten Schritt wird das aromatische Diisocyanat aus Methylendi(phenylisocyanat) **B2** der Komponente **B1** beigemischt, um somit die Härterkomponente **B** herzustellen.

In der ganz besonders bevorzugten Ausführungsform, in der die Komponente **B1.2** identisch mit der Komponente **B2** ist, erfolgt die Herstellung der Härterkomponente **B** durch direktes Vermischen der hydroxylgruppenhaltigen Verbindung **B1.1** mit dem aromatischen Diisocyanat aus Methylendi(phenylisocyanat) **B2.** Beim Vermischen der Komponenten kommt es zur Reaktion der OH-Gruppen mit den NCO-Gruppen unter Ausbildung der urethangruppenhaltigen Komponente **B1** enthaltend unblockierte Isocyanatgruppen. In dieser ganz besonders bevorzugten Ausführungsform liegt das anfängliche Verhältnis der OH-Gruppen der Komponente **B1.1** zu den NCO-Gruppen der Komponente **B2** in einem Bereich von 0,5:4 bis 1,5:4, vorzugsweise 0,8:4 bis 1,2:4.

Bezogen auf die erfindungsgemäßen Beschichtungsmittelzusammensetzungen ist es weiterhin bevorzugt, dass das Verhältnis der Hydroxylgruppen aller Komponenten der Bindemittelkomponente **A** zu den Isocyanatgruppen der Härterkomponente **B** OH:NCO in einem Bereich von 1:0,9 bis 1:1,4 liegt, besonders bevorzugt liegt das Verhältnis bei 1:1,1.

Liegt in der Beschichtungsmittelzusammensetzung ein Überschuss an OH-Gruppen im Vergleich zu den Isocyanatgruppen vor, nimmt die Unterwanderungsneigung der resultierenden Beschichtung zu. Der Überschuss an Isocyanatgruppen führt zu einer verringerten Unterwanderungsneigung der Beschichtung. Übersteigt der Überschuss an Isocyanatgruppen allerdings das zuvor beschriebene Verhältnis, nimmt die Entfernbarkeit der resultierenden Beschichtung durch Zunahme der Haftung am Substrat ab.

### Weitere Bestandteile der Beschichtungsmittelzusammensetzung

### Pigmente und Füllstoffe

Pigmente sind gemäß DIN EN ISO 4618 Farbmittel, die aus feinen Teilchen bestehen, die in der flüssigen Phase des Beschichtungsstoffes unlöslich sind und aufgrund ihrer optischen, schützenden und/oder dekorativen Eigenschaften verwendet werden. Der Begriff Farbmittel schließt hierbei schwarze oder weiße Farbmittel ein. Bevorzugte Pigmente sind farbgebende Pigmente und/oder effektgebende Pigmente und Korrosionsschutzpigmente. Unter effektgebenden Pigmenten sind solche zu verstehen, die einen optischen Effekt geben, der insbesondere auf Lichtreflexion beruht. Typische effektgebende Pigmente im Sinne dieser Anmeldung sind Pigmente mit eine hohen chemischen und thermischen Beständigkeit.

Füllstoffe hingegen sind nach DIN EN ISO 4618 Materialien in körniger oder Pulverform, die in der flüssigen Phase eines Beschichtungsstoffs unlöslich sind und verwendet werden, um bestimmte physikalische Eigenschaften zu erreichen oder zu beeinflussen. Da es zwischen Pigmenten und Füllstoffen hinsichtlich ihres Verwendungszwecks zu Überschneidungen kommen kann, wird häufig der Brechungsindex zu deren Unterscheidung herangezogen. Dieser liegt bei Füllstoffen unterhalb von 1,7, weshalb diese Produktklasse kein nennenswertes Streu- und Deckvermögen erreicht. Eine Unterscheidung ist im Rahmen der vorliegenden Erfindung jedoch nicht zwingend notwendig.

Vorzugsweise werden in den erfindungsgemäßen Beschichtungsmittelzusammensetzungen Pigmente eingesetzt, um die Bindemittelkomponente **A** und die Härterkomponente **B** einzufärben und damit bei der Applikation eine optische Mischungskontrolle zu haben. Bei der Auswahl der Pigmente wird vorzugsweise ihre chemische Beständigkeit gegenüber den Chemikalien des chemischen Fräsbades berücksichtigt.

Bevorzugte Pigmente basieren auf einer (Mono-)Azo-Gruppierung (-N=N-) und weisen vorzugsweise einen gelben Farbton auf. Beispielsweise kann hierzu das Pigment C.I. Pigment Yellow 74 verwendet werden. Besonders bevorzugte Pigmente weisen einen schwarzen Farbton auf und basieren auf organischen Ruß. Beispielsweise kann hierzu das Pigment C.I. Pigment Black 7 verwendet werden. Weitere typische und in der erfindungsgemäßen Beschichtungsmittelzusammensetzung einsetzbare Pigmente sind Weißpigmente wie beispielsweise Titandioxid in der Rutil- Form oder auf Kupfer-Phthalocyanin-basierende Blaupigmente.

Vorzugsweise wird als Füllstoff alkaliarmes Borsilikatglas in Form von Mikrohohlkugeln eingesetzt. Der vorzugsweise Einsatz von Mikrohohlkugeln in den erfindungsgemäßen Beschichtungszusammensetzungen trägt zur Verbesserung der Sichtbarkeit von Klingenanschnitten bei. Des Weiteren können Talkum, Glimmer, Bariumsulfat, silikat-basierte Komponenten sowie quartärer Alkyl-Ammoniumton als Füllstoffe in der erfindungsgemäßen Beschichtungsmittelzusammensetzung eingesetzt werden.

### Weitere Bestandteile

Die erfindungsgemäßen Beschichtungsmittelzusammensetzungen können zusätzlich zu den bereits vorhandenen Bindemitteln weitere Bindemittel enthalten. Diese Bindemittel umfassen beispielsweise typische Lackadditive wie Entlüftungsmittel aus Polysiloxanen, Haftvermittler aus Glycidoxypropyltrimethoxysilanen, rheologische Additive wie Thixotropierungsmittel und Katalysatoren aus Amin-, Zinn-,

Diazabicyclooctan- und/oder Zink-, Zirkon- und Aluminiumverbindungen. Die erfindungsgemäßen Beschichtungsmittelzusammensetzungen können auch zu den Füllstoffen zählende Molekularsiebe aus Zeolithen enthalten.

Besonders bevorzugt enthalten die erfindungsgemäßen Beschichtungsmittelzusammensetzungen Katalysatoren aus Zirkon, Zinn- und/oder Zinkkomplexen und/oder Bismutsalzen und/oder Aluminiumverbindungen, welche in der Lage sind die Reaktion zwischen Hydroxyl- und Isocyanatgruppen zu katalysieren.

In einer weiteren besonders bevorzugten Ausführungsform enthalten die erfindungsgemäßen Beschichtungsmittelzusammensetzungen bezogen auf die Gesamtmasse der Beschichtungsmittelzusammensetzung 0,05 bis 0,15 Gew.-%, vorzugsweise 0,08 bis 0,10 Gew.-%, Entlüftungsmittel, 0,10 bis 1,00 Gew.-%, vorzugsweise 0,20 bis 0,50 Gew.-%, Haftvermittler, 0,01 bis 0,40 Gew.-%, vorzugsweise 0,04 bis 0,23 Gew.-%, rheologische Additive, 0,01 bis 5,00 Gew.-%, vorzugsweise 1,50 bis 2,50 Gew.-% Molekularsiebe und 0,10 bis 1,00 Gew.-%, vorzugsweise 0,35 bis 0,45%, Katalysatoren.

### Erfindungsgemäßes Verfahren zur Herstellung einer Abziehlackschicht

Weiterer Gegenstand der vorliegenden Erfindung ist ein Verfahren zur Herstellung einer Abziehlackschicht, erhältlich durch Aufbringen einer erfindungsgemäßen Beschichtungsmittelzusammensetzung auf ein metallisches Substrat oder Kunststoffsubstrat.

Bevorzugt handelt es sich bei dem Substrat um ein metallisches Substrat, besonders bevorzugt handelt es sich um Substrate aus Aluminium und/oder Aluminiumlegierungen.

Nach der EN ISO 4618:2006 (Stand April 2007) ist ein Abziehlack definiert als ein Beschichtungsstoff, der durch Abziehen von einem Substrat wieder entfernt werden kann, auf das er als zeitweiliger Schutz aufgetragen wurde. Dementsprechend ist eine Abziehlackschicht eine Beschichtung, die durch Abziehen von einem Substrat wieder entfernt werden kann. Der Begriff Abziehen beschreibt in diesem Zusammenhang das rückstandslose Entfernen einer Beschichtung von einem Substrat durch Einwirken einer mechanischen Zugkraft. Vorzugsweise erfolgt beim Abziehen das rückstandslose Entfernen der Beschichtung in einem Stück.

Zur Herstellung einer erfindungsgemäßen Abziehlackschicht wird die erfindungsgemäße Beschichtungsmittelzusammensetzung auf ein metallisches Substrat und oder ein Kunststoffsubstrat in einem Einschichtspritzvorgang mit einer Nassschichtdicke von 100 bis 600 µm, bevorzugt 150 bis 450 µm, aufgebracht. Die Applikation der Beschichtungsmittelzusammensetzung erfolgt vorzugsweise über eine 2-Komponenten Anlage, bei der die Bindemittelkomponente **A** und die Härterkomponente **B** getrennt der Applikationseinheit zugeführt werden. Eine Vermischung der beiden Komponenten **A** und **B** erfolgt vorzugsweise erst in der Applikationseinheit. Beispielsweise kann hierzu eine Airless Spritzpistole mit integrierter Statikmischereinheit verwendet werden. Vorzugsweise erfolgt eine Applikation der erfindungsgemäßen Beschichtungsmittelzusammensetzung bei Temperaturen zwischen 20 und 80 °C. Applikationstemperaturen oberhalb der Umgebungstemperatur werden durch Heizen der Applikationseinheit und gegebenenfalls durch Heizen der Aufbewahrungsbehälter realisiert.

Nach der Applikation der erfindungsgemäßen Beschichtungsmittelzusammensetzung auf ein Substrat erfolgt die chemische Vernetzung der Bindemittelmittelkomponente **A** mit der Härterkomponente **B.** Die chemische Vernetzung wird bei Temperaturen von 15 bis 60 °C, vorzugsweise bei 15 bis 25 °C, durchgeführt.

Aufgrund des hohen Festkörpergehaltes der erfindungsgemäßen Beschichtungsmittelzusammensetzungen ist der Volumenschrumpf beim Aushärten der Beschichtungsmittelzusammensetzung als vernachlässigbar anzusehen. Der Volumenschrumpf liegt im Fehlerbereich der Bestimmung der entsprechenden Schichtdicken. Schichtdickenbestimmungen der gehärteten Beschichtungsmittelzusammensetzung werden mittels eines modularen Schichtdicken-Mess-Systems von Qnix®8500 durchgeführt.

Weiterer Gegenstand der vorliegenden Erfindung ist die Verwendung der erfindungsgemäßen Beschichtungsmittelzusammensetzung zur Herstellung einer abziehbaren und chemikalienbeständigen Beschichtung für metallische Substrate und/oder Kunststoffsubstrate, bevorzugt metallische Substrate, besonders bevorzugt Substrate aus Aluminium und/oder Aluminiumlegierungen. Bevorzugt handelt es sich bei den Aluminiumlegierungen um Knetlegierungen. Bevorzugt erfolgt die Verwendung zum Schutz von Substraten in chemischen Fräsbädern zum Ausdünnen von Bauteilen im Flugzeugbau.

Weiterer Gegenstand der vorliegenden Erfindung ist ein Substrat bestehend aus einem oder mehreren Metallen und/oder Kunststoffen, welches mit einer chemisch vernetzten erfindungsgemäßen Beschichtungsmittelzusammensetzung beschichtet ist oder durch das erfindungsgemäße Verfahren zur Herstellung einer Abziehlackschicht erhalten wurde.

Weiterer Gegenstand der Erfindung ist ein Verfahren zum chemischen Fräsen von metallischen Substraten, wobei zunächst die erfindungsgemäße Herstellung einer Abziehlackschicht erfolgt, die das metallische Substrat partiell beschichtet und anschließend das partiell mit der Abziehlackschicht beschichtete Substrat in ein chemisches Fräsbad eingetaucht wird. Bevorzugte Substrate sind Substrate aus Aluminium und/oder Aluminiumlegierungen. Besonders bevorzugt ist das Substrat ein Bauteil für den Flugzeugbau. Die chemischen Fräsbäder können alkalische oder saure Fräsbäder sein. Die partielle Beschichtung des metallischen Substrats kann durch Abdecken nicht zu beschichtender Bereiche erzielt werden oder durch das Aufbringen einer zunächst vollständig das metallische Substrat bedeckenden Abziehlackschicht gefolgt von einer partiellen Entfernung dieser Abziehlackschicht.

Im Folgenden soll die Erfindung durch Beispiele näher erläutert werden.

Sofern nicht anders ausgeführt, handelt es sich bei Angaben in Teilen um Gewichtsteile und bei Angaben in Prozenten um Gewichtsprozente.

### Herstellung erfindungsgemäßer Ausführungsformen BM1 bis BM6 der Bindemittelkomponente A:

**Tabelle 1: Zusammensetzung der Ausführungsformen BM1 bis BM3**

| Bindemittelkomponente **A** | | | |
|---|---|---|---|
| | **BM1** | **BM2** | **BM3** |
| **Vorlage** | | | |
| Propoxyliertes Polyethylenglykol **A1.1** | 13,75 | 13,75 | 13,75 |
| Formulierung aus Propylenglykol **A1.2** enthaltend 20 Gew.-% Polyurethanharnstoff **A4** bezogen auf die Formulierung | 11,00 | 11,00 | 11,00 |
| 40-Gew.-% Silikonelastomerdispersion enthaltend 40 Gew.-% Silikonelastomerpartikel **A3** in propoxyliertem Trimethylolpropan **A1.3** | 10,00 | 20,00 | 10,00 |
| Modifiziertes Polyamid Verdickungsmittel | 0,10 | 0,10 | 0,10 |
| Organomodifiziertes mineralisches Verdickungsmittel | 0,35 | 0,35 | 0,35 |
| Füllstoff enthaltend Chlorit, Glimmer und Quarz | 5,50 | 5,50 | 5,50 |
| Molekularsieb als Feuchtigkeitsfänger | 4,00 | 4,00 | 4,00 |
| | | | |
| Propoxyliertes Polyethylenglykol **A1.1** | 20,00 | 10,00 | 16,00 |
| Organischer Katalysator | 0,28 | 0,28 | 0,28 |
| Beschleuniger 2 enthaltend Diazabicyclooctan und Tris(Dimethylaminopropylamin) | 0,24 | 0,24 | 0,24 |
| Metallkomplex Katalysator auf Basis von Zink | 0,28 | 0,28 | 0,28 |
| Aromatisches Diamin **A2** | 6,00 | 6,00 | 10,00 |
| Silikonhaltiger Entschäumer | 0,10 | 0,10 | 0,10 |
| | | | |
| Formulierung aus Propylenglykol **A1.2** enthaltend 20 Gew.-% Polyurethanharnstoff **A4** bezogen auf die Formulierung | 26,00 | 26,00 | 26,00 |
| | | | |
| gamma-Glycidoxy-propyltrimethoxysilan | 0,40 | 0,40 | 0,40 |
| Mikrohohlkugeln | 2,00 | 2,00 | 2,00 |
| | | | |
| Gesamt Bindemittelkomponente **A** | 100,00 | 100,00 | 100,00 |

**Tabelle 2: Zusammensetzungen der Ausführungsformen BM4 bis BM6**

| Bindemittelkomponente **A** | | | |
|---|---|---|---|
| | **BM4** | **BM5** | **BM6** |
| **Vorlage** | | | |
| Propoxyliertes Polyethylenglykol **A1.1** | 13,75 | 13,75 | 13,75 |
| Formulierung aus Propylenglykol **A1.2** enthaltend 20 Gew.-% Polyurethanharnstoff **A4** bezogen auf die Formulierung | 21,00 | 11,00 | 11,00 |
| 40-Gew.-% Silikonelastomerdispersion enthaltend 40 Gew.-% Silikonelastomerpartikel **A3** in propoxyliertem Trimethylolpropan **A1.3** | 10,00 | 20,00 | 10,00 |
| Modifiziertes Polyamid Verdickungsmittel | 0,10 | 0,10 | 0,10 |
| Organomodifiziertes mineralisches Verdickungsmittel | 0,35 | 0,35 | 0,35 |
| Füllstoff enthaltend Chlorit, Glimmer und Quarz | 5,50 | 5,50 | 5,50 |
| Molekularsieb als Feuchtigkeitsfänger | 4,00 | 4,00 | 4,00 |
| | | | |
| Propoxyliertes Polyethylenglykol **A1.1** | 10,00 | 10,00 | 19,40 |
| Organischer Katalysator | 0,28 | 0,28 | 0,28 |
| Beschleuniger 2 enthaltend Diazabicyclooctan und Tris(Dimethylaminopropylamin) | 0,24 | 0,24 | 0,24 |
| Metallkomplex Katalysator auf Basis von Zink | 0,28 | 0,28 | 0,28 |
| Aromatisches Diamin **A2** | 6,00 | 6,00 | 10,00 |
| Silikonhaltiger Entschäumer | 0,10 | 0,10 | 0,10 |
| | | | |
| Formulierung aus Propylenglykol **A1.2** enthaltend 20 Gew.-% Polyurethanharnstoff **A4** bezogen auf die Formulierung | 26,00 | 26,00 | 26,00 |
| | | | |
| gamma-Glycidoxy-propyltrimethoxysilan | 0,40 | 0,40 | 1,00 |
| Mikrohohlkugeln | 2,00 | 2,00 | 2,00 |
| | | | |
| Gesamt Bindemittelkomponente **A** | 100,00 | 100,00 | 100,00 |

Die Herstellung der erfindungsgemäßen Bindemittelkomponenten **A** erfolgt, indem zunächst die gemäß Tabelle 1 und 2 unter "Vorlage" aufgeführten Komponenten gemäß obiger Reihenfolge vermischt werde. Anschließend erfolgt eine Dispergierung bis zu einer Temperatur von 55 °C. Nach dem Erreichen dieser Temperatur, werden alle weiteren Komponenten unter Rühren hinzugegeben. Nach vollständiger Zugabe wird für weitere 15 Minuten gerührt. Nach einer Reifezeit von mindestens 12 Stunden sind die Bindemittelkomponenten zur Verwendung bereit.

### Herstellung erfindungsgemäßer Ausführungsformen H1 bis H3 der Härterkomponente B:

**Tabelle 3: Zusammensetzung der Härterkomponente B: H1 bis H3**

| Härterkomponente **B** | | | |
|---|---|---|---|
| | **H1** | **H2** | **H3** |
| Methylendi(phenylisocyanat) Isomerengemisch **B1.2** und **B2** | 70,62 | 62,62 | 81,62 |
| Poly(oxyalkylenglykol) aus Ethylenoxid/Propylenoxid **B1.1** | 28,4 | 36,4 | 18,4 |
| gamma-Glycidoxy-propyltrimethoxysilan | 0,5 | 1,0 | 0,8 |
| Pigmentpaste schwarz | 0,4 | | 0,4 |
| Pigmentpaste gelb | | 0,6 | |
| Silikonhaltiger Entschäumer | 0,08 | 0,1 | 0,08 |
| Gesamt Härterkomponente **B** | 100,00 | 100,00 | 100,00 |

Zur Herstellung der Härterkomponenten **B** wird das Methylendi(phenylisocyanat) Isomerengemisch vorlegt und die übrigen Komponenten werden in der angegebenen Reihenfolge unter Rühren vorgegeben. Die anschließende Reaktionszeit beträgt 1 bis 12 Stunden.

### Herstellung von erfindungsgemäßen Beschichtungszusammensetzungen C1 bis C4

Die erfindungsgemäße Beschichtungsmittelzusammensetzung wird durch Vermischen von 100 Gew.-Teilen der Bindemittelkomponente **A** mit 40 Gew.-Teilen der Härterkomponente B hergestellt. Es wurden folgende Beschichtungsmittelzusammensetzungen hergestellt: **BM1** mit **H1 (C1)**, **BM1** mit **H3 (C2)**, **BM2** mit **H1 (C3)** und **BM6** mit **H1 (C4).**

### Herstellung einer Beschichtungsmittelzusammensetzung (Vergleich) VC1

Es wurde eine Beschichtungsmittelzusammensetzung analog der Rezeptur 1 der WO 97/35932 als Vergleichsbeispiel hergestellt.

### Herstellung der Abziehlackschichten

Zur Herstellung der Abziehlackschichten **SC1** bis **SC4** und **SVC1** wurden die zuvor beschriebenen Beschichtungsmittelzusammensetzungen auf Aluminiumprüfbleche der Legierung 2024, unplattiert, mittels einer Zwei-Komponenten-Hochdruckspritzanlage, deren Vorratsbehälter und Schlauchsystem temperierbar sind, beidseitig beschichtet. Die Trockenschichtdicke lag im Bereich von 250 bis 450 µm. Diese wurde 30 Minuten nach der Applikation bestimmt.

### Ergebnisse

Die Prüfung der chemischen Beständigkeit sowie der Unterwanderungsneigung erfolgte nach dem nachfolgend beschriebenen Verfahren.

Nach einer zweistündigen Trockenzeit wurde auf jedem Prüfblech ein erster, sogenannter "Haftzugswert" ermittelt um die Haftzugskraft in Gramm zu ermitteln, die notwendig ist einen 1 cm breiten Lackstreifen vom Untergrund zu entfernen. Diese Werte geben Aufschluss darüber, wie hoch der Kraftaufwand ist um ein Bauteil zu demaskieren. Weiterhin werden so Ausschnitte erhalten, die später nach den Beizvorgängen zur Begutachtung der Unterwanderungsresistenz der Beschichtung genutzt werden. Die Ermittlung eines Haftzugswertes findet insgesamt viermal statt und nachfolgend exemplarisch beschrieben:
Ein Lackstreifen mit dem Maß 10 x 1 cm wurde mit einer scharfen Klinge angeschnitten. Dieser Bereich wurde entfernt. Dies diente dazu sicherzustellen, dass die eigentliche Testfläche bei der späteren Haftungsprüfung mit Sicherheit keine Fehlmessungen, aufgrund von möglicherweise nicht durchdringend tiefen Schnittlinien aufweist. Hiernach werden die ersten 10 mm des verbleibenden Lackstreifens mittels der zum Anschnitt eingesetzten Klinge angehebelt, so dass ein Fixierungspunkt für die später anzuklemmende Federwaage entsteht. An diesem Fixpunkt wird nun, um ein Abrutschen der Federwaage zu verhindern, eine Heftklammer quer über die Breite der Fläche aufgebracht. Nun wird an dieser Heftklammer eine zuvor geeichte Federwage mittels Zahnklemme angeklemmt. Anschließend wird die Federwage im 45°-Winkel zum Untergrund ausgerichtet. Sobald die Federwaage den korrekten Winkel eingenommen hat, wird mit der Federwaage der Lackstreifen innerhalb von 3 Sekunden vom Untergrund abgezogen. Parallel hierzu wird die dafür notwendige Kraft auf der Skalierung der Federwaage abgelesen.

Nachdem auf jedem Prüfblech der jeweils erste Haftzugswert ermittelt wurde, werden die Prüfbleche in ein zuvor auf 70 °C aufgeheiztes Natriumhydroxidbad (16 Gew.-% Natriumhydroxid in 84 Gew.-% vollentsalztem Wasser) überführt und dort für 10 Minuten chemisch gefräst. Anschließend werden die Prüfbleche zum Abwaschen der Laugenreste in ein Wasserbad überführt. Die Verweildauer im Wasserbad betrug 2 Minuten.

Zehn Minuten nach dem ersten Frässchritt wurde erneut auf jeder Prüftafel ein Haftzugswert ermittelt. Anschließend erfolgte ein zweiter Beizschritt.

Die Prüfbleche wurden für den zweiten Beizschritt erneut in das bereits beschriebene Natriumhydroxidbad überführt und verblieben für 25 bis 30 Minuten im Bad. Nach dieser Zeit erfolgt erneut eine zweiminütige Wässerung im Wasserbad. Im Anschluss an diese Wässerung werden die Proben für 30 Sekunden aus dem Wasser genommen. Dies simuliert Abtropfprozesse in der späteren Anwendung und dient dazu kein bzw. nur sehr geringe Mengen Wasser in das folgende Salpetersäurebad einzutragen.

Nach der Hebephase erfolgte eine Neutralisation der Prüftafeln in einem Salpetersäurebad. Die Neutralisationsphase beträgt exakt 70 Sekunden und wird anschließend erneut mit einer 30 sekündigen Hebephase beendet. Nach dieser Hebephase erfolgt erneut eine zweiminütige Verweildauer im Wasserbad. Vier Minuten nach dem Verlassen des Wasserbades wurde der dritte Haftzugswert wie beschrieben bestimmt. 18 Stunden nach der Bestimmung des dritten Haftzugswerts wird der vierte Haftzugswert ermittelt. Dies simuliert eine Übernacht-Lagerung bereits gefräster Bauteile vor einem Demaskierungsprozess. Während dieser Verweildauer können die Fräskanten des Aluminiums an den Fensterbereichen, welche demaskiert im Natronlauge-Fräsbad belastet wurden, beurteilt werden.

**Tabelle 3: Ergebnisse der Haftzugprüfung**

| **SC1** | Gesamt |
|---|---|
| Haftzug AL 2024 2h nach Applikation | 150-410 g |
| Haftzug AL 2024 nach 10 min beizen | 130-400 g |
| Haftzug AL 2024 nach 30 min beizen | 160-450 g |
| Haftzug AL 2024 18h nach letztem Beizschritt | 250-530 g |
| | |

| **SC2** | Gesamt |
|---|---|
| Haftzug AL 2024 2h nach Applikation | 250-400 g |
| Haftzug AL 2024 nach 10 min beizen | 230-400 g |
| Haftzug AL 2024 nach 30 min beizen | 270-450 g |
| Haftzug AL 2024 18h nach letztem Beizschritt | 330-500 g |
| | |

| **SC3** | Gesamt |
|---|---|
| Haftzug AL 2024 2h nach Applikation | 150-390 g |
| Haftzug AL 2024 nach 10 min beizen | 150-420 g |
| Haftzug AL 2024 nach 30 min beizen | 190-470 g |
| Haftzug AL 2024 18h nach letztem Beizschritt | 280-540 g |
| | |

| **SC4** | Gesamt |
|---|---|
| Haftzug AL 2024 2h nach Applikation | 220-410 g |
| Haftzug AL 2024 nach 10 min beizen | 200-400 g |
| Haftzug AL 2024 nach 30 min beizen | 230-420 g |
| Haftzug AL 2024 18h nach letztem Beizschritt | 310-500 g |

Die Unterwanderungsneigung der Abziehlackschichten hergestellt aus den erfindungsgemäßen Beschichtungsmittelzusammensetzungen liegt unterhalb von 2 mm. Bei den Abziehlackschichten hergestellt aus den nicht erfindungsgemäßen Beschichtungsmittelzusammensetzungen zeigen sich diskontinuierliche Unterwanderungseinfälle zwischen 2 und 5 mm.

## Patentansprüche

1. Beschichtungsmittelzusammensetzung enthaltend mindestens eine Bindemittelkomponente **A** und mindestens eine Härterkomponente **B**,
die Bindemittelkomponente **A** enthaltend,
**A1** mindestens eine Polyetherpolyolkomponente aus Poly(oxyalkylen)glykol,
**A2** mindestens ein aromatisches Diamin,
**A3** Silikonelastomerpartikel und
**A4** mindestens einen Polyurethanharnstoff,
die Härterkomponente **B** enthaltend,
**B1** mindestens eine urethangruppenhaltige Komponente enthaltend unblockierte Isocyanatgruppen und
**B2** mindestens ein aromatisches Diisocyanat aus Methylendi(phenylisocyanat),
wobei die Härterkomponente B einen Gehalt an unblockierten Isocyanatgruppen von 10 bis 30 Gew.-% aufweist und
wobei der Festkörpergehalt der Beschichtungsmittelzusammensetzung größer als 95 Gew.-% ist.

2. Beschichtungsmittelzusammensetzung nach Anspruch 1, wobei
die Komponente **A1** in einer Menge von 8 bis 76 Gew.-%,
die Komponente **A2** in einer Menge von 1 bis 8 Gew.-%,
die Komponente **A3** in einer Menge von 0,2 bis 9 Gew.-%,
die Komponente **A4** in einer Menge von 0,5 bis 11 Gew.-%, und
die Härterkomponente **B** in einer Menge von 20 bis 40 Gew.-% jeweils bezogen auf das Gesamtgewicht der Beschichtungsmittelzusammensetzung enthalten ist.

3. Beschichtungsmittelzusammensetzung nach einem der Ansprüche 1 oder 2, wobei die Polyetherpolyolkomponente **A1** aus Poly(oxyalkylenglykol) mindestens ein Poly(oxyalkylen)glykol aus Ethylen- und/oder Propylenoxid enthält.

4. Beschichtungsmittelzusammensetzung nach Anspruch 3, wobei die Polyetherpolyolkomponente **A1** mindestens ein propoxyliertes Polyethylenglykol **A1.1,** mindestens ein Polypropylenglykol **A1.2** sowie mindestens ein propoxyliertes Trimethylolpropan **A1.3** enthält.

5. Beschichtungsmittelzusammensetzung nach einem der Ansprüche 1 bis 4, wobei die urethangruppenhaltige Komponente **B1** hergestellt wird durch Reaktion einer hydroxylgruppenhaltigen Komponente **B1.1** mit eine Isocyanatkomponente **B1.2,** wobei die hydroxylgruppenhaltige Komponente **B1.1** eine Polyetherpolyolkomponente aus Poly(oxyalkylen)glykol ist, die Isocyanatkomponente **B1.2** ein aromatisches Diisocyanat aus Methylendi(phenylisocyanat) ist und das Verhältnis der OH-Gruppen der Komponente **B1.1** zu den NCO-Gruppen der Isocyanatkomponente **B1.2** in einem Bereich von 1:1,05 bis 1:2,05 liegt.

6. Beschichtungsmittelzusammensetzung nach Anspruch 1 bis 5, wobei der Anteil der Komponente **B2** bezogen auf die Härterkomponente **B** 40 bis 60 Gew.-% beträgt.

7. Beschichtungsmittelzusammensetzung nach einem der Ansprüche 1 bis 6, wobei das aromatische Diamin **A2** ein einkerniger Aromat ist, bevorzugt ist das aromatische Diamin **A2** alkyliert und besonders bevorzugt sind die Amingruppen direkt an den Aromaten gebunden.

8. Beschichtungsmittelzusammensetzung nach einem der Ansprüche 1 bis 7, wobei die Silikonelastomerpartikel Kern-Schale-Partikel sind, die einen Kern enthaltend vernetztes Polysiloxan aufweisen und eine Schale mit die reaktiven Gruppen aufweisen.

9. Beschichtungsmittelzusammensetzung nach einem der Ansprüche 1 bis 8, wobei der Festkörpergehalt der Beschichtungsmittelzusammensetzung größer als 97 Gew.-% ist, bevorzugt größer als 98 Gew.-% und besonders bevorzugt größer als 99 Gew.-% ist.

10. Beschichtungsmittelzusammensetzung nach einem der Ansprüche 1 bis 9, wobei diese als Füllstoff alkaliarmes Borsilikatglas in Form von Mikrohohlkugeln enthält.

11. Verfahren zur Herstellung einer Abziehlackschicht erhältlich durch Aufbringen einer Beschichtungsmittelzusammensetzung nach einem der Ansprüche 1 bis 10 auf ein metallisches Substrat und/oder Kunststoffsubstrat in einem Einschichtspritzvorgang mit einer Nassschichtdicke von 100 bis 600 µm, bevorzugt 150 bis 350 µm, und anschließende Härtung durch chemische Vernetzung in einem Temperaturbereich von 15 bis 60 °C, bevorzugt 15 bis 25 °C.

12. Verfahren zum chemischen Fräsen von metallischen Substraten umfassend i) die Herstellung einer Abziehlackschicht gemäß Anspruch 11, die das metallische Substrat partiell beschichtet, wobei die partielle Beschichtung mit der Abziehlackschicht entweder durch vorheriges Abdecken nicht zu beschichtender Bereiche erzielt wird oder zunächst eine vollständig das Substrat bedeckende Abziehlackschicht auf das Substrat aufgebracht wird und diese anschließend partiell entfernt wird, und ii) das Eintauchen des partiell mit der Abziehlackschicht beschichteten Substrats in ein alkalisches oder saures chemisches Fräsbad.

13. Verwendung einer Beschichtungsmittelzusammensetzung nach einem oder mehreren der Ansprüche 1 bis 10 zur Herstellung einer abziehbaren und chemikalienbeständigen Beschichtung für metallische Substrate und/oder Kunststoffsubstrate, bevorzugt metallische Substrate, besonders bevorzugt Substrate aus Aluminium und/oder Aluminiumlegierungen.

14. Verwendung nach Anspruch 13 zum Schutz von Substraten in chemischen Fräsbädern zum Ausdünnen von Bauteilen für den Flugzeugbau.

15. Substrat bestehend aus einem oder mehreren Metallen und/oder Kunststoffen, welches mit einer chemisch vernetzten Beschichtungsmittelzusammensetzung gemäß einem der Ansprüche 1 bis 10 beschichtet ist oder durch das Verfahren nach Anspruch 11 erhalten wurde.

## Claims

1. A coating composition containing at least one binder component **A** and at least one curing agent component **B**,
the binder component **A** containing
**A1** at least one polyether polyol component of poly(oxyalkylene) glycol,
**A2** at least one aromatic diamine,
**A3** silicone elastomer particles and
**A4** at least one polyurethane urea,
the curing agent component **B** containing
**B1** at least one urethane group-containing component containing unblocked isocyanate groups and
**B2** at least one aromatic diisocyanate of methylene di(phenyl isocyanate),
wherein the curing agent component **B** has a content of unblocked isocyanate groups of from 10 to 30% by weight and
wherein the solids content of the coating composition is greater than 95% by weight.

2. The coating composition according to claim 1, wherein
component **A1** is present in an amount of from 8 to 76% by weight, component **A2** is present in an amount of from 1 to 8% by weight, component **A3** is present in an amount of from 0.2 to 9% by weight, component **A4** is present in an amount of from 0.5 to 11% by weight, and the curing agent component **B** is present in an amount of from 20 to 40% by weight,
in each case based on the total weight of the coating composition.

3. The coating composition according to one of claims 1 and 2, wherein the polyether polyol component **A1** of poly(oxyalkylene glycol) contains at least one poly(oxyalkylene) glycol of ethylene oxide and/or propylene oxide.

4. The coating composition according to claim 3, wherein the polyether polyol component **A1** comprises at least one propoxylated polyethylene glycol **A1.1,** at least one polypropylene glycol **A1.2** and at least one propoxylated trimethylolpropane **A1.3.**

5. The coating composition according to one of claims 1 to 4, wherein the urethane group-containing component **B1** is prepared by reacting a hydroxyl group-containing component **B1.1** with an isocyanate component **B1.2,** wherein the hydroxyl group-containing component **B1.1** is a polyether polyol component of poly(oxyalkylene) glycol, the isocyanate component **B1.2** is an aromatic diisocyanate of methylene di(phenyl isocyanate), and the ratio of the OH groups of component **B1.1** to the NCO groups of the isocyanate component **B1.2** is in a range of from 1:1.05 to 1:2.05.

6. The coating composition according to claims 1 to 5, wherein the fraction of component **B2**, based on the curing agent component **B**, is from 40 to 60% by weight.

7. The coating composition according to one of claims 1 to 6, wherein the aromatic diamine **A2** is a mononuclear aromatic compound, the aromatic diamine **A2** preferably is alkylated, and the amine groups particularly preferably are bonded directly to the aromatic compound.

8. The coating composition according to one of claims 1 to 7, wherein the silicone elastomer particles are core-shell particles which have a core containing cross-linked polysiloxane and a shell having the reactive groups.

9. The coating composition according to one of claims 1 to 8, wherein the solids content of the coating composition is greater than 97% by weight, preferably greater than 98% by weight and particularly preferably greater than 99% by weight.

10. The coating composition according to one of claims 1 to 9, wherein it contains low-alkali borosilicate glass in the form of hollow microspheres as filler.

11. A process for producing a peelable coating film obtainable by applying a coating composition according to one of claims 1 to 10 to a metal substrate and/or plastic substrate with a wet film thickness of from 100 to 600 µm, preferably from 150 to 350 µm, in a one-coat spraying operation and then curing by chemical cross-linking in a temperature range of from 15 to 60°C, preferably from 15 to 25°C.

12. A process for chemical milling of metal substrates, comprising i) producing a peelable coating film according to claim 11 which partially coats the metal substrate, wherein the partial coating with the peelable coating film is achieved either by previously covering regions that are not to be coated or by first applying to the substrate a peelable coating film which completely covers the substrate and which is subsequently partially removed, and ii) immersing the substrate partially coated with the peelable coating film in an alkaline or acidic chemical milling bath.

13. The use of a coating composition according to one or more of claims 1 to 10 for producing a peelable and chemically resistant coating for metal substrates and/or plastic substrates, preferably metal substrates, particularly preferably substrates of aluminum and/or aluminum alloys.

14. The use according to claim 13 for protecting substrates in chemical milling baths for thinning out components for aircraft construction.

15. A substrate made of one or more metals and/or plastic materials which is coated with a chemically cross-linked coating composition according to one of claims 1 to 10 or has been obtained by the process according to claim 11.

## Revendications

1. Composition d'agent de revêtement contenant au moins un composant d'agent liant A et au moins un composant durcisseur B,
le composant d'agent liant A comprenant
A1 au moins un composant de polyéther polyol à partir de poly(oxyalkylène)glycol,
A2 au moins une diamine aromatique,
A3 des particules d'élastomère de silicone et
A4 au moins une polyuréthane-urée
le composant durcisseur B comprenant
B1 au moins un composant contenant des groupes uréthane, contenant des groupes isocyanate non bloqués, et
B2 au moins un diisocyanate aromatique à partir de méthylène di(phénylisocyanate),
dans laquelle le composant durcisseur B présente une teneur en groupes isocyanate non bloqués de 10 à 30 % en poids et
dans laquelle la teneur en corps solides de la composition d'agent de revêtement est supérieure à 95 % en poids.

2. Composition d'agent de revêtement selon la revendication 1, dans laquelle
le composant A1 est contenu en une quantité de 8 à 76 % en poids,
le composant A2, en une quantité de 1 à 8 % en poids,
le composant A3, en une quantité de 0,2 à 9 % en poids,
le composant A4, en une quantité de 0,5 à 11 % en poids, et
le composant durcisseur B, en une quantité de 20 à 40 % en poids respectivement par rapport au poids total de la composition d'agent de revêtement.

3. Composition d'agent de revêtement selon l'une des revendications 1 ou 2, dans laquelle le composant polyéther polyol A1 à partir de poly(oxyalkylène glycol) contient au moins un poly(oxyalkylène glycol) à partir d'oxyde d'éthylène et/ou de propylène.

4. Composition d'agent de revêtement selon la revendication 3, dans laquelle le composant polyéther polyol A1 comprends au moins un polyéthylène glycol propoxylé A1.1, au moins un polypropylène glycol A1.2 et au moins un triméthylolpropane propoxylé A1.3.

5. Composition d'agent de revêtement selon l'une des revendications 1 à 4, dans laquelle le composant contenant un groupe uréthane B1 est préparé par réaction d'un composant contenant des groupes hydroxyle B1.1 avec un composant isocyanate B1.2, dans laquelle le composant contenant des groupes hydroxyle B1.1 est un composant polyéther polyol à partir de poly(oxyalkylène glycol), le composant isocyanate B1.2 est un diisocyanate aromatique à partir de méthylène di(phénylisocyanate) et le rapport des groupes OH du composant B1.1 sur les groupes NCO du composant isocyanate B1.2 se situe dans une plage de 1:1,05 à 1:2,05.

6. Composition d'agent de revêtement selon l'une des revendications 1 à 5, dans laquelle la proportion de composant B2 par rapport au composant durcisseur B est de 40 à 60 % en poids.

7. Composition d'agent de revêtement selon l'une des revendications 1 à 6, dans laquelle la diamine aromatique A2 est un composé aromatique mononucléaire, de préférence, la diamine aromatique A2 est alkylée et, de manière particulièrement préférée, les groupes amine sont directement liés aux composés aromatiques.

8. Composition d'agent de revêtement selon l'une des revendications 1 à 7, dans laquelle les particules d'élastomère de silicone sont des particules noyau-enveloppe qui présentent un noyau contenant du polysiloxane réticulé et une enveloppe avec des groupes réactifs.

9. Composition d'agent de revêtement selon l'une des revendications 1 à 8, dans laquelle la teneur en corps solide de la composition d'agent de revêtement est supérieure à 97 % en poids, de préférence supérieure à 98 % en poids et de manière particulièrement préférée supérieure à 99 % en poids.

10. Composition d'agent de revêtement selon l'une des revendications 1 à 9, dans laquelle celle-ci contient du verre borosilicaté pauvre en alcalin prenant la forme de microsphères creuses en tant que charge.

11. Procédé de fabrication d'une couche de laque pelable pouvant être obtenue par dépôt d'une composition d'agent de revêtement selon l'une des revendications 1 à 10 sur un substrat métallique et/ou un substrat en matière plastique dans une opération de projection monocouche à une épaisseur de couche à l'état humide de 100 à 600 µm, de préférence 150 à 350 µm, et durcissement consécutif par réticulation chimique dans une plage de températures de 15 à 60 °C, de préférence 15 à 25 °C.

12. Procédé de fraisage chimique de substrats métalliques comprenant i) la fabrication d'une couche de laque pelable selon la revendication 11, qui revêt partiellement le substrat métallique, dans lequel le revêtement partiel avec la couche de laque pelable est obtenu soit par recouvrement préalable des zones ne devant pas être revêtues, soit d'abord par dépôt, sur le substrat, d'une couche de laque pelable couvrant entièrement le substrat puis par élimination partielle de celle-ci, et ii) l'immersion du substrat partiellement revêtu par la couche de laque pelable dans un bain de fraisage chimique alcalin ou acide.

13. Utilisation d'une composition d'agent de revêtement selon l'une ou plusieurs des revendications 1 à 10 pour la fabrication d'un revêtement pelable et résistant aux produits chimiques pour des substrats métalliques et/ou des substrats en matière plastique, de préférence des substrats métalliques, de manière particulièrement préférée des substrats en aluminium et/ou en alliages d'aluminium.

14. Utilisation selon la revendication 13 pour la protection de substrats dans des bains de fraisage chimiques aux fins de l'amincissement de composants pour la construction aéronautique.

15. Substrat constitué d'un ou de plusieurs métaux et/ou plastiques, qui est revêtu avec une composition d'agent de revêtement réticulée chimiquement selon l'une des revendications 1 à 10 ou a été obtenu par le procédé selon la revendication 11.
